(19) **Europäisches Patentamt / European Patent Office / Office européen des brevets**

(11) **EP 1 501 766 B1**

(12) **FASCICULE DE BREVET EUROPEEN**

(45) Date de publication et mention
de la délivrance du brevet:
**18.02.2009 Bulletin 2009/08**

(21) Numéro de dépôt: **03749931.6**

(22) Date de dépôt: **07.05.2003**

(51) Int Cl.:
**C03B 33/033** (2006.01)   **C03B 27/00** (2006.01)
**C03B 23/023** (2006.01)

(86) Numéro de dépôt international:
**PCT/FR2003/001417**

(87) Numéro de publication internationale:
**WO 2003/095378 (20.11.2003 Gazette 2003/47)**

(54) **VITRAGE DECOUPE SANS ROMPAGE**

GLASSCHNEIDEVERFAHREN OHNE BRECHEN

GLASS CUTTING METHOD WHICH DOES NOT INVOLVE BREAKING

(84) Etats contractants désignés:
**AT BE BG CH CY CZ DE DK EE ES FI FR GB GR HU IE IT LI LU MC NL PT RO SE SI SK TR**

(30) Priorité: **07.05.2002 FR 0205956**

(43) Date de publication de la demande:
**02.02.2005 Bulletin 2005/05**

(73) Titulaire: **SAINT-GOBAIN GLASS FRANCE**
**92400 Courbevoie (FR)**

(72) Inventeurs:
• **GAUME, Olivier**
**08000 Vilanova y La Geltru, Barcelona (ES)**
• **Valladeau, Serge**
**93700 Drancy (FR)**

(74) Mandataire: **Jamet, Vincent**
**Saint-Gobain Recherche,**
**39, quai Lucien Lefranc**
**93300 Aubervilliers (FR)**

(56) Documents cités:

| | |
|---|---|
| DE-A- 10 013 693 | DE-C- 666 861 |
| FR-A- 1 598 242 | FR-A- 2 027 057 |
| FR-A- 2 053 664 | FR-A- 2 063 482 |
| US-A- 3 107 196 | US-A- 4 018 372 |
| US-A- 4 898 605 | US-A- 5 254 149 |

**Description**

L'invention concerne un procédé de découpe d'un vitrage sans qu'il ne soit nécessaire d'appliquer une force de rompage.

La découpe d'un verre est habituellement réalisée selon les étapes successives suivantes :

- traçage d'une sous-fissure selon la ligne de découpe souhaitée, puis
- application d'une force (de rompage) pour que la sous-fissure se propage en fissure à travers l'épaisseur du verre, ce qui provoque le rompage attendu.

Par ailleurs, après la découpe d'un verre, on peut souhaiter lui améliorer sa résistance mécanique, par exemple sa résistance mécanique de bord en flexion. Pour ce faire, on peut réaliser sur le verre découpé une trempe chimique, généralement en le plongeant dans un bain de nitrate de potassium fondu. Les verres trempés chimiquement ont donc leur forme définitive avant la trempe chimique et ils ne sont pas destinés à être découpés après la réalisation de la trempe.

Le WO9846537 enseigne des compositions particulières de verre obtenu par trempe chimique (échange d'ions potassium) pour la réalisation de vitrages dans le domaine aéronautique. Aucune découpe n'est envisagée après la trempe chimique.

Le EP793132 enseigne des cellules constituées d'une paire de lames de verre ayant des électrodes à leur surface et dont au moins une des lames a subi une trempe chimique. Le verre destiné à être intégré dans une telle cellule est trempé chimiquement, puis entaillé et rompu en autant d'éléments individuels qui seront intégrés dans la cellule. La trempe chimique est ici exercée sur une épaisseur de 20 $\mu$m au maximum. Ce document enseigne qu'habituellement, après avoir entaillé un verre, il faut appliquer une pression pour le rompre, et que dans le cas d'un verre trempé chimiquement, si la couche traitée chimiquement est trop épaisse, le rompage peut être rendu extrêmement difficile. L'objet du EP793132 est de réaliser une trempe chimique permettant de rompre le verre de façon classique. Pour ce faire, du verre ayant une épaisseur maximale de 2 mm est traité chimiquement sur une épaisseur maximale de 20 $\mu$m.

Le EP875490 décrit un procédé continu de préparation de verre durci par trempe chimique. Le verre doit avoir une épaisseur maximale de 1,2 mm et est soumis à la trempe en moins de deux heures. La trempe chimique est réalisée sur une épaisseur maximale de 30 $\mu$m. Le verre peut être enroulé. Le verre peut être recouvert de couches par exemple métalliques et réalisées par sputtering, et peut trouver une application en LCD ou DTR. Le verre traité chimiquement peut être découpé en plaques ou feuilles. Ce document n'enseigne pas les conditions particulières permettant de découper le verre sans rompage.

Le EP982121 décrit des structures tricouches dont l'une au moins en surface est en verre et comprend des entailles. Les entailles peuvent avoir une largeur nulle. De préférence, la couche juste en dessous du verre entaillé est flexible (p ;e ; c'est un polymère). Ainsi le tricouche a plus de flexibilité grâce aux entailles. Le verre entaillé peut avoir été trempé chimiquement. Si l'entaille a une largeur non-nulle, elle peut être remplie avec un polymère ayant un indice de réfraction identique à celui du verre entaillé. Les applications envisagées sont : carte de sécurité, vitrage de bâtiments, cartes à puce, photomasques. Les entailles peuvent être laissées visibles de façon à avoir un effet miroir.

Le EP964112 enseigne un panneau comprenant une feuille de verre présentant sur une partie de son épaisseur des sillons disposés horizontalement et parallèles entre-eux. Ces découpes sont de préférence réalisées par laser. Ce document n'envisage pas la trempe chimique du verre.

Les FR 1598242, FR 2053664 et FR 2063482 enseignent la trempe thermique en présence d'écrans protégeant certaines zones de la trempe. La découpe est ensuite réalisée dans ces zones. Ce traitement génère nécessairement un déséquilibre des contraintes dans l'épaisseur en comparaison avec une vitre trempé thermiquement sans écran. Ainsi, ces vitrages ne sont pas auto-équilibrés dans l'épaisseur. De plus, un ruban ainsi traité n'est pas homogène et oblige à réaliser la découpe dans les zones protégées par les écrans. Ces documents n'enseignent donc pas comment réaliser un vitrage que l'on peut découper sans rompage après traçage à n'importe quel endroit de sa surface, alors que c'est le cas pour les vitrage selon l'invention en raison de leur homogénéité. De plus, les écrans préconisés par ces documents détériorent l'effet de la trempe thermique au niveau des bord, justement aux endroits où l'on attend généralement un renforcement par la trempe.

On a maintenant découvert un comportement inhabituel du verre, lorsqu'on le découpe après l'avoir traité d'une certaine façon.

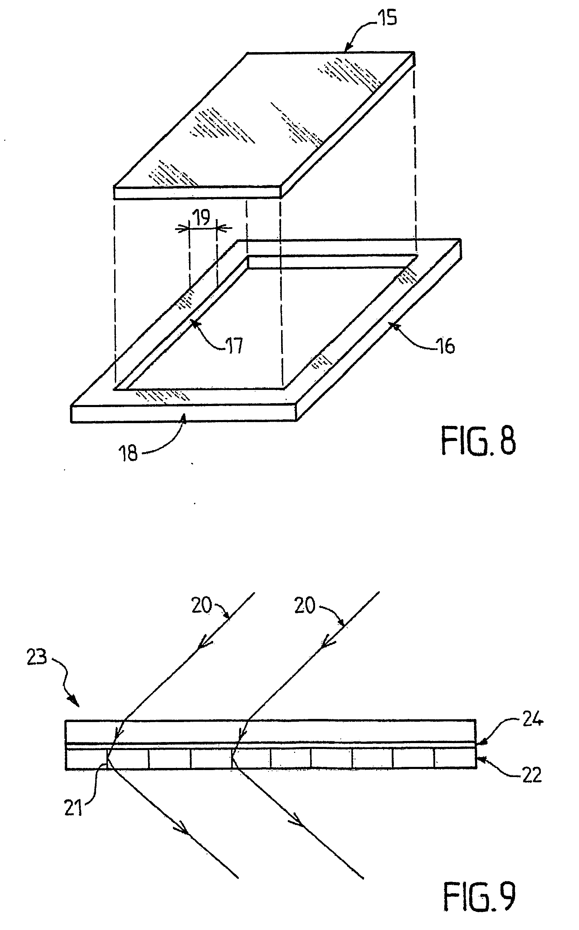

Lorsque les paramètres essentiels de l'invention ont été réalisés, la fissure provoquée par le traçage se propage toute seule à travers le vitrage traité, c'est-à-dire sans qu'il ne soit nécessaire d'appliquer une force de rompage. Dans l'esprit de la présente demande, le terme vitrage a un sens très général sans limitation de forme, englobant tous les objet à base de verre et comprenant généralement deux faces principales généralement parallèles, et notamment les cadres de la figure 8.

Selon l'invention, on a découvert qu'un verre traité de façon à présenter un facteur K compris entre 0,05 et 0,4 MPa.m$^{1/2}$, était découpable sans qu'il ne soit nécessaire d'appliquer une force de rompage, le facteur K étant défini par

$$K = \left[ \int_z \sigma_z^2 . H(\sigma_z).dz \right]^{1/2}$$

dans laquelle z est une position dans l'épaisseur, $\sigma_z$ est l'intensité de la contrainte biaxiale sensiblement isotrope à la position z, $H(\sigma_z)$ est égal à 1 si $\sigma_z$ est supérieur à 0 et est égal à 0 si $\sigma_z$ est inférieur ou égal 0, avec la convention qu'une extension est notée positivement et une compression négativement.

En effet, pour un tel verre, la sous-fissure se propage d'elle-même en fissure traversant l'épaisseur du verre, même en l'absence de force de rompage. Il convient que la sous-fissure atteigne la zone en extension du vitrage et soit plus profonde que 10 $\mu$m. L'invention permet notamment la découpe sans rompage de feuilles de verre de toutes épaisseurs, notamment inférieures à 500 $\mu$m, mais également supérieures à 1,2 mm et même supérieures à 2,6 mm, épaisseurs que l'on ne sait habituellement pas découper directement au laser dans le cas d'un vitrage non conforme à l'invention. La découpe selon l'invention mène de plus généralement à une tranche non coupante pour la main, ce qui est avantageux sur le plan de la sécurité. Généralement, la découpe sans rompage selon l'invention est réalisée sur du verre d'épaisseur inférieure ou égale à 5,2 mm.

Ainsi l'invention concerne un procédé de découpe d'un vitrage comprenant une feuille de verre comprenant deux faces principales, ledit procédé ne faisant pas intervenir de force de rompage, ledit procédé comprenant les étapes suivantes :

- application d'un traitement à la feuille de verre générant des contraintes et au moins une zone en compression et au moins une zone en extension, la distribution des contraintes étant biaxiale, sensiblement isotrope et auto-équilibrée dans son épaisseur, lesdites contraintes étant telles que le facteur K est compris entre 0,05 et 0,4 MPa.m$^{1/2}$,
- traçage d'une sous-fissure plus profonde que 10 $\mu$m selon une ligne souhaitée de découpe, ladite sous-fissure atteignant la zone du vitrage en extension.

Les contraintes donnant au verre sa propriété d'être découpable sans rompage, peuvent être conférées à tout type de verre par un traitement adapté, et notamment:

- une trempe chimique ou
- la réalisation d'au moins une couche mince ou
- la soumission du verre à une flexion biaxiale sensiblement isotrope pendant le traçage.

Les deux premiers traitements mentionnés ci-dessus mènent intrinsèquement à une distribution de contraintes biaxiale sensiblement isotrope. Ces deux premiers traitements mènent également à des contraintes qui sont résiduelles après découpe. Le troisième traitement (soumission à une flexion biaxiale) ne mène pas à des contraintes résiduelles après découpe puisque les forces de flexion disparaissent dès le rompage du verre.

Le traitement confère au verre une distribution de contraintes biaxiale sensiblement isotrope, ce qui signifie que les contraintes s'exercent dans des directions parallèles au vitrage, et pour une profondeur donnée, avec sensiblement la même intensité dans toutes les directions parallèles au vitrage. Ces contraintes biaxiales sont généralement isotropes dans un plan parallèle au vitrage. Ces contraintes sont auto-équilibrées dans l'épaisseur du vitrage, ce qui signifie que les contraintes en extension équilibrent les contraintes en compression, ce qui revient également à dire que $\int_z \sigma(z)dz = 0$ dans laquelle $\sigma(z)$ représente la contrainte à la position z dans l'épaisseur du vitrage. L'invention permet la réalisation d'un vitrage découpable selon l'invention n'importe où. Un tel vitrage peut présenter une grande surface, notamment supérieure à 10 cm, voire supérieure à 20 cm, voire supérieure à 50 cm, voire supérieure à 1 m, dans toutes les directions parallèles à ses faces principales (cas d'un vitrage plan).

Avant ledit traitement, le verre peut n'avoir aucune contrainte interne. Il peut notamment s'agir d'un verre flotté, Le verre peut-être de toute composition, et notamment être de type sodocalcique ou présenter l'une des compositions décrites dans les FR97/04508 ou WO96/11887.

Pour le cas où l'on choisit le traitement par trempe chimique, le verre doit contenir un oxyde d'alcalin. Cet oxyde peut être $Na_2O$ ou $Li_2O$, et être présent dans le verre à raison par exemple de 1 à 20% en poids. Le traitement de trempe chimique consiste à remplacer des ions alcalins initialement dans le verre par d'autres ions alcalins plus gros. Si l'oxyde initial est $Na_2O$, on applique une trempe chimique par traitement au $KNO_3$, de façon à remplacer au moins partiellement des ions $Na^+$ par des ions $K^+$. Si l'oxyde initial est $Li_2O$, on appliquer une trempe chimique par traitement au $NaNO_3$ ou au $KNO_3$, de façon à remplacer au moins partiellement des ions $Li^+$ suivant le cas par des ions $Na^+$ où $K^+$. Notamment dans le cas où le traitement est une trempe chimique, le verre découpé selon l'invention présente une résistance mécanique de bord améliorée. La trempe peut donc mener à un gradient de concentration en ions $K^+$ ou $Na^+$ perpendiculairement à au moins l'une des faces principales et décroissant à partir de ladite face principale.

Pour mesurer le facteur K dans le verre, on peut utiliser la technique du biasographe. Cette technique est bien connue de l'homme du métier, et l'on peut notamment se rapporter à l'ouvrage « Photoelasticity of glass », H. Aben, C. Guillemet, Springer-Verlag 1993, page 150.

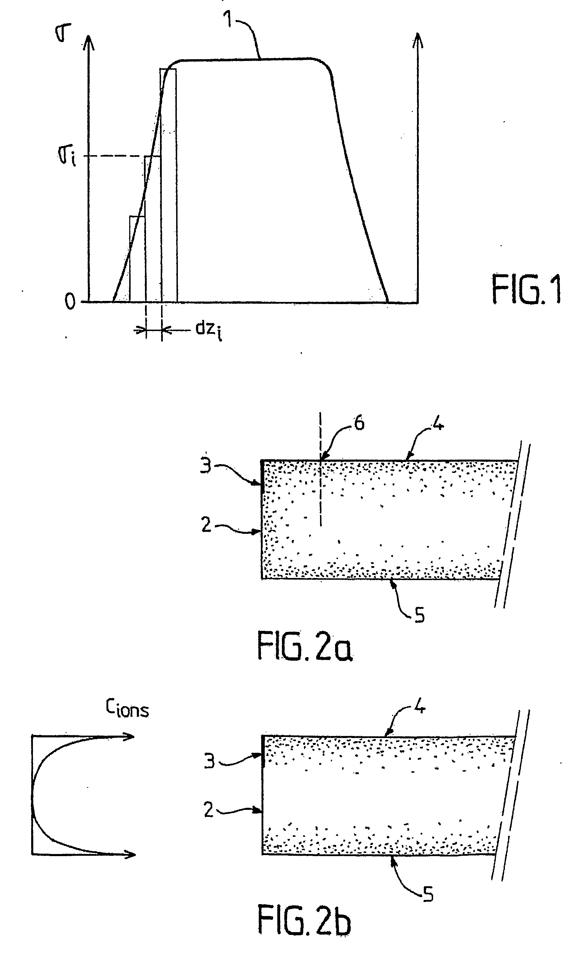

La technique du biasographe donne un profil d'intensité de contraintes comme par exemple la courbe (1) représentée sur la figure 1 qui représente l'évolution de la contrainte sigma en fonction de la profondeur dans le verre (l'axe des abscisses est perpendiculaire au vitrage). On mesure alors pour toute la courbe (1) l'ensemble des contraintes $\sigma_i$ correspondant à une épaisseur $dz_i$, la valeur de $dz_i$ étant par exemple de 8 $\mu$m. En pratique, le facteur K est alors évalué par la formule

$$K \quad = \quad ( \sum \sigma_i^2 \cdot dz_i )^{1/2}$$

La technique du biasographe nécessite de pouvoir accéder à la tranche du vitrage. Pour utiliser cette technique, il est préférable que la largeur du vitrage soit égale à au moins cinq fois son épaisseur. On peut également utiliser d'autres méthodes de photoélasticité comme le stratoréfractomètre.

Pour obtenir un vitrage ayant un facteur K compris entre 0,05 et 0,4 $MPa.m^{1/2}$, on peut lui faire subir une trempe chimique. Cette trempe chimique doit être réalisée pendant une durée suffisante et à une température suffisante pour que le facteur K soit compris entre 0,05 et 0,4 $MPa.m^{1/2}$. Par des tests de routine, l'homme du métier peut trouver la durée et la température permettant l'obtention de telles valeurs. Généralement, la trempe chimique est réalisée en plongeant le vitrage à traiter dans un bain chaud du sel choisi (généralement $NaNO_3$ ou $KNO_3$). Ce bain contient le sel concentré. La trempe chimique est généralement réalisée entre 380°C et 520°C, et de toute manière à une température inférieure à la température de ramollissement du verre à traiter. La trempe chimique produit un échange d'ions à la surface du verre traité sur une profondeur pouvant aller par exemple jusqu'à 50 $\mu$m. Cet échange d'ion est à l'origine de gradients de concentration en ion alcalin. Généralement ce gradient se caractérise par une diminution de la concentration en ions apportés par la trempe chimique (généralement $K^+$ ou $Na^+$) à partir de la face principale et en direction du coeur du vitrage. Ce gradient existe entre la surface et par exemple une profondeur d'au plus 50 $\mu$m. Ce gradient est représenté sur la figure 2 par des points dont la densité diminue plus l'on va vers l'intérieur du vitrage. La profondeur du gradient est exagérée sur les figures pour faciliter la compréhension.

Les vitrages de l'art antérieur trempés chimiquement, compte tenu de ce qu'ils ne sont pas découpés après la trempe chimique, présentent la même composition sur toute leur surface, y compris la tranche. La figure 2 a) représente en coupe le bord d'un vitrage traité chimiquement après découpe. La découpe a donné naissance à la tranche (2). La trace de la sous-fissure (3) est visible sur la tranche et est représentée sur la figure 2 a) par un trait plus gras (rappelons qu'une sous-fissure est toujours visible sur la tranche découpée d'un vitrage, à l'oeil nu si le vitrage est d'épaisseur suffisante, où au microscope pour les vitrages trop fins, par exemple d'épaisseur inférieure à 500$\mu$m). La trempe chimique du vitrage après découpe a donné lieu à un échange d'ions alcalins entre le vitrage et le milieu de trempe. Cet échange a créé un gradient de concentration d'ions alcalins de la surface du vitrage vers l'intérieur du vitrage, ce gradient existant à partir des faces principales parallèles ((4) et (5) sur la figure 2) du vitrage et à une distance suffisante des tranches (dont celle notée (2)), par exemple à partir du point (6) en surface d'une face principale et perpendiculairement à cette face en direction du coeur du vitrage. Ce point (6) peut généralement être à au moins 1 mm de la tranche. Ce gradient n'existe pas sur la tranche selon une direction perpendiculaire aux faces principales mais existe sur la tranche selon une direction parallèle aux faces principales du vitrage et à une distance suffisante desdites faces principales.

La figure 2 b) représente un vitrage selon l'invention, pour lequel la découpe a été réalisée après le traitement de trempe chimique. On comprend que dans ce cas, la tranche (2) découpée selon l'invention présente une composition variable suivant que l'on est proche ou éloigné des faces principales parallèles du vitrage. La surface de la tranche découpée selon l'invention présente un gradient de concentration de surface en ions alcalins entre la face principale ayant subit la sous-fissure et le coeur du vitrage. C'est là une différence fondamentale avec un verre découpé avant d'être traité par trempe chimique (cas de la figure 2 a)) pour lequel ce gradient sur la tranche n'existe pas. Dans le cas de la présente invention, la tranche découpée selon l'invention présente ce gradient et présente la marque de la sous-fissure, cette dernière pouvant cependant ensuite être enlevée par exemple par abrasion ou polissage. Ainsi l'invention concerne également un vitrage comprenant une telle tranche sans sous-fissure apparente.

Si la trempe chimique a été réalisée par un bain de nitrate de potassium, la concentration de surface en ions potassium est maximale sur la tranche à l'extrémité de la tranche, c'est-à-dire à l'angle entre la tranche et la face principale ayant subit la sous-fissure. Cette évolution de la concentration de surface $C_{ions}$ en ions sur la tranche est schématisée par la courbe à gauche de la figure 2 b). Par contre, cette tranche n'a pas de gradient de concentration dans une direction parallèle aux faces principales du vitrage (les faces notées (4) et (5) de la figure 2a)). La tranche comprenant la sous-fissure ne comprend donc pas de gradient en ions alcalins dans la direction perpendiculaire à ladite tranche.

Le traitement conférant au verre les contraintes peut également être l'application d'au moins une couche mince. Le dépôt de la couche doit être réalisé de façon à ce qu'elle soit en compression au moment du traçage. On peut notamment aboutir à cela en réalisant le dépôt à chaud (généralement entre 400 et 700°C) d'une couche dont le coefficient de dilatation est inférieur à celui du substrat. La couche se met alors en compression lors du refroidissement. La découpe est alors réalisée après retour à la température ambiante du verre revêtu. La couche peut être réalisée notamment par les procédés sol-gel ou de sérigraphie ou CVD. La couche peut également être réalisée à basse température par le procédé de pulvérisation magnétron où CVD plasma, et ce notamment lorsque la couche est en nitrure de silicium. On peut vérifier que la couche est en compression car elle tend naturellement à donner de la convexité au substrat revêtu, vu du côté de la couche.

La couche présente une épaisseur permettant l'obtention du facteur d'intensité des contraintes souhaité. Généralement, la couche présente une épaisseur allant de 1 à 20 $\mu$m. De préférence, la couche contient une contrainte allant de 200 MPa à 5 GPa, par exemple environ 300 MPa. L'homme du métier sait mesurer la contrainte dans une couche sur verre. Cette contrainte dans la couche peut notamment se mesurer à partir de la modification de la courbure du verre, ou à partir de la contrainte qu'elle a induit dans le verre, cette dernière s'évaluant habituellement par photoélasticité.

La couche peut notamment être en nitrure de silicium, carbonitrure de silicium, carbure de silicium, oxycarbure de silicium, oxycarbonitrure de silicium, oxyde de titane, en nitrure de titane, carbonitrure de titane, carbure de titane, oxycarbure de titane, oxycarbonitrure de titane.

On peut également appliquer une couche en compression de chaque côté du substrat. Lorsque le verre n'est revêtu que d'un seul côté par une couche en compression, on peut réaliser le traçage du côté de la couche. Pour le traçage, on peut appliquer une force sur le vitrage tendant à faire diminuer la convexité conférée au verre revêtu par la couche, mais cela n'est pas indispensable. Lorsque le verre est revêtu sur ses deux faces par une couche en compression, le traçage peut être réalisé sur l'une où l'autre des faces.

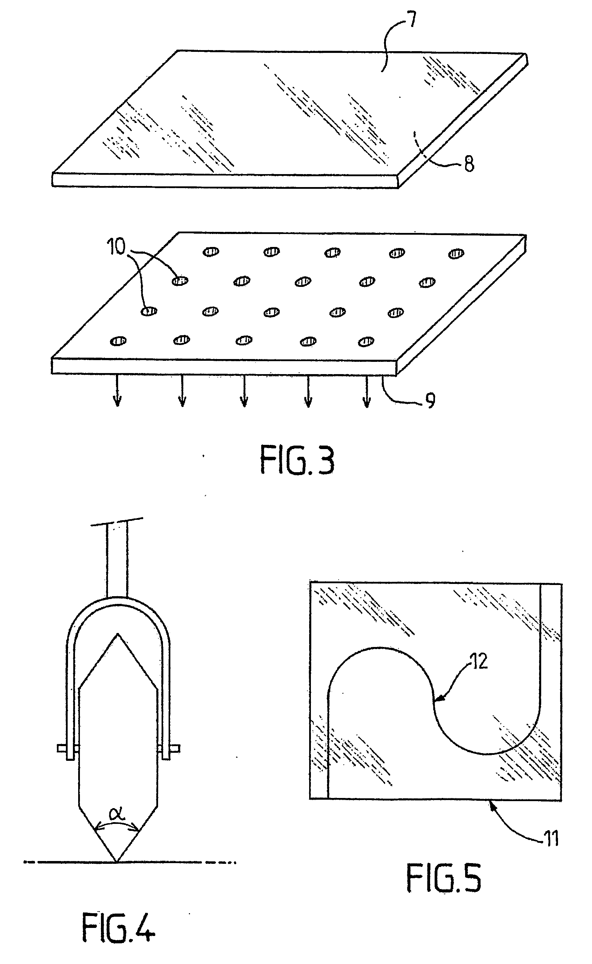

Le traitement conférant au verre la contrainte peut également être l'application d'une force de flexion biaxiale sensiblement isotrope. On peut appliquer une force de flexion biaxiale adaptée en portant les deux faces principales du vitrage à des températures différentes et en luttant par application d'une force sur le vitrage contre la déformation que cette différence de température tend naturellement à induire. On procède au traçage et donc au rompage tant que la différence de température et la force luttant contre la déformation existent. Dans ce cas, les forces de flexion sont générées par la combinaison d'une part de l'application de températures différentes sur les faces principales, et d'autre part de forces résistant à la déformation que la différence de température induit. La figure 3 illustre un mode de réalisation selon ce principe. Sur cette figure, on distingue un vitrage présentant deux faces principales (7) et (8) et une plaque (9) comprenant une pluralité d'orifices (10). Le vitrage peut être plaqué contre la plaque dès lors qu'il est aspiré contre celle-ci grâce à une aspiration s'exerçant à travers les orifices. La plaque est portée à une température différente de celle de départ du vitrage de façon à ce que la face (8) présente une température différente de celle de la face (7). La création de cette différence de température entre les deux faces du vitrage est à l'origine de la création de contrainte dans le vitrage tant que le vitrage reste plaqué contre la plaque. En effet, si on laissait le vitrage prendre sa forme d'équilibre, celui-ci ne contiendrait aucune contrainte. Si la face (8) est plus chaude que la face (7), c'est la face (8) qui est en compression tant que le vitrage reste plaqué. Dans ce cas, on peut réaliser le traçage sur la face (7), c'est-à-dire la face en extension. La sous-fissure sur cette face atteint donc immédiatement la zone en extension et une sous-fissure de très faible profondeur, tout en restant plus profonde que 10 $\mu$m, peut être suffisante. Si la face (8) est plus froide que la face (7), c'est cette dernière qui est en compression tant que le vitrage reste plaqué. Dans ce cas, on peut réaliser le traçage sur la face (7), c'est-à-dire la face en compression, auquel cas, la sous-fissure devant être plus profonde que l'épaisseur en compression pour atteindre la zone en extension, elle doit être plus profonde que la moitié de l'épaisseur du vitrage.

Dans le cas de l'application d'une force de flexion, le traçage doit être réalisé pendant l'exercice de ladite force. Les forces appliquées pour générer la contrainte dans le verre sont bien inférieures aux forces de rompage classiques. Par exemple, pour un vitrage d'épaisseur allant de 0,1 à 5,2 mm, ces forces de flexion peuvent être comprises entre 3 et 70 MPa, étend entendu que plus le vitrage est de faible épaisseur, plus la force doit être importante. Généralement, pour un vitrage d'épaisseur allant de 1 à 5,2 mm, ces forces de flexion peuvent être comprises entre 3 et 20 MPa. En fait, dès que le traçage est effectué, la sous-fissure se propage dans toute l'épaisseur du verre et il serait possible d'arrêter immédiatement les forces de flexion juste après le traçage sans que cela n'ai une quelconque influence sur le rompage.

Pour obtenir une découpe sans rompage du verre présentant un facteur K adapté, on effectue un traçage à la surface du verre sur une ligne correspondant à celle de la découpe souhaitée. Ce traçage mène à une sous-fissure (également appelé fissure aveugle par l'homme du métier). Le traçage peut notamment être réalisé par une molette ou par un diamant ou par laser. Habituellement, et plus particulièrement pour un vitrage d'épaisseur allant de 1 à 3 mm, la sous-fissure est profonde de 100 à 1000 $\mu$m. Habituellement, la sous-fissure a une profondeur comprise entre 10% et 20%, par exemple environ 15% de l'épaisseur du vitrage.

Lorsqu'on utilise une molette ou un diamant, on réalise le traçage sous une charge suffisante pour l'obtention d'une profondeur de sous-fissure suffisante, laquelle doit pouvoir se propager sans application d'une force de rompage. Lorsqu'on utilise une molette ou un diamant, on réalise de préférence le traçage sous huile de découpe (également appelé « pétrole » par l'homme du métier). Lorsqu'on utilise une molette, on utilise de préférence une molette avec un angle élevé, par exemple 145°. L'angle de la molette est l'angle alpha comme représenté sur la figure 4. Pour une molette ou un diamant donné, on peut également trouver une charge adaptée au traçage par des tests de routine. En effet, une charge insuffisante se traduit par une absence de rupture, alors qu'une charge trop forte se traduit par une rupture incontrôlée, c'est-à-dire ne se faisant pas toujours en suivant la ligne de traçage.

Lorsque les paramètres essentiels de l'invention ont été réalisés, la fissure provoquée par le traçage se propage toute seule à travers le vitrage traité, c'est-à-dire sans qu'il ne soit nécessaire d'appliquer une force de rompage. Il est possible d'accélérer la propagation de la fissure par au moins l'une des manières suivantes :

- par l'eau : on fait rentrer un peu d'eau dans la sous-fissure ; pour ce faire, on peut par exemple humidifier le vitrage avant découpe, en n'humidifiant que la partie (typiquement quelques mm) du vitrage correspondant à la fin du traçage.
- en augmentant la charge du traçage en fin de traçage.

Le traçage doit mener à une sous-fissure. Le traçage peut être réalisé sur une face principale du vitrage en compression, ou, si elle existe, sur une face principale du vitrage en extension. Lorsque le traçage est réalisé sur une face principale en compression (notamment dans le cas d'une surface traitée par trempe chimique ou par une couche en compression), la sous-fissure est plus profonde que l'épaisseur en compression $e_c$ de façon à atteindre la zone en extension. De préférence, notamment dans le cas où le traitement est une trempe chimique, la sous-fissure est profonde de 5 à 20 fois la valeur de l'épaisseur en compression $e_c$.

Dans le cas d'un traitement par trempe chimique, l'épaisseur en compression peut être évaluée par la profondeur d'échange en ions $P_e$ laquelle peut être déterminée

a) soit par

$$P_e = \frac{\sqrt{\pi} \times Mv \times ev \times \Delta m}{32 \times a \times mi}$$

dans laquelle

$a$     représente le % molaire d'oxyde alcalin initial dans le verre (par exemple $Na_2O$ ou $Li_2O$),

$mi$     représente la masse totale initiale (avant trempe) du verre en grammes,

$Mv$     représente la masse molaire du verre en g/mole,

$\Delta m$     représente la prise de poids du verre pendant la trempe en grammes,

$ev$     représente l'épaisseur du verre en micromètres,

$P_e$     étant ainsi obtenu en micromètres,

b) soit par un profil microsonde auquel cas elle est définie par la profondeur pour laquelle la teneur en ions apportés par la trempe est égale à celle de la matrice verrière à 5% près.

Dans le cas d'un traitement par réalisation d'une couche, l'épaisseur en compression est égale à l'épaisseur de la couche, dès lors que la couche est en compression et qu'aucune force extérieur ne déforme sensiblement le vitrage.

Dans le cas d'un traitement par application de forces de flexion, si le traçage est réalisé du côté en compression, l'épaisseur en compression est égale à la moitié de l'épaisseur du vitrage. Dans le cas d'un traitement par application de forces de flexion, si le traçage est réalisé du côté en extension, la sous-fissure peut être peu profonde tout en restant supérieure à 10 $\mu$m.

L'invention permet notamment la découpe sans rompage d'une feuille de verre dont l'épaisseur est au moins égale à 0,3 mm, voire au moins égale à 0,7 mm, voire au moins égale à 1,2 mm, voire supérieure à 1,5 mm, voire même au moins égale à 2,6 mm. Généralement, la feuille de verre a une épaisseur inférieure à 20 mm, par exemple d'au plus 5,2 mm. Notamment, le vitrage peut présenter une épaisseur allant de 0,7 mm à 5,2 mm, par exemple 2,6 à 5,2 mm.

La découpe selon l'invention commence par le traçage d'une sous-fissure en surface d'un verre, et l'on observe la propagation d'une fissure à travers toute l'épaisseur de la partie inorganique du vitrage ayant subit la découpe. En effet, dans le cas d'un vitrage feuilleté associant au moins deux feuilles de verre placées de part et d'autre d'un intercalaire en polymère, l'une des feuilles de verre étant traitée selon l'invention et soumise à un traçage selon l'invention, il est clair que la fissure traverse seulement la feuille ayant subi le traçage et pas l'autre feuille de verre se trouvant de l'autre côté de l'intercalaire en polymère.

L'invention concerne également un vitrage comprenant une feuille de verre comprenant deux faces principales et au moins une tranche, ledit vitrage présentant une distribution de contraintes dans son épaisseur, lesdites contraintes étant biaxiales, sensiblement isotropes et autoéquilibrées, et dont le facteur K est compris entre 0,05 et 0,4 MPa.m$^{1/2}$.

L'invention permet la réalisation de profils de découpe que l'art antérieur ne permettait pas de réaliser.

Selon l'invention, il est possible de réaliser une découpe de verre selon une ligne courbe avec un très faible rayon de courbure, et ce même avec un verre épais. En au moins un endroit de la ligne de découpe, le rayon de courbure peut être inférieur à 40 mm, voire inférieur à 30 mm, voire inférieur à 20 mm, voire inférieur à 10 mm, voire inférieur à 5 mm. Généralement, le rayon de courbure est supérieur à 3 mm. De tels rayons de courbure de découpe peuvent être obtenus pour un vitrage d'épaisseur même supérieure à 1 mm, voire supérieur à 2,6 mm. Généralement, pour la réalisation de rayons de courbure inférieurs à 10 mm, on préfère que le vitrage soit d'épaisseur inférieure à 5,2 mm. Notamment, il est ainsi possible de réaliser la découpe de disques d'enregistrement magnétique, c'est-à-dire à la fois leur découpe circulaire périphérique ainsi que leur trou circulaire central.

Selon l'invention, il est possible de réaliser une découpe selon une ligne courbe changeant de concavité, et même enchaînant des concavités inverses avec des rayons de courbures très faibles, comme ceux qui viennent d'être donnés. La figure 5 illustre une forme de découpe réalisée sur un vitrage (11), ladite découpe présentant un changement de concavité au point (12). Au point (12) sont enchainées deux courbes de concavité différentes. Sur la figure 5, de part et d'autre du point (12), la courbe a le même rayon de courbure en valeur absolue, lequel peut-être très faible comme déjà explicité.

Selon l'invention, il est possible de découper du verre sur une très faible largeur. Un vitrage possède généralement une épaisseur, une largeur et une longueur (au moins égale à la largeur). Généralement, le vitrage à découper selon de l'invention a une épaisseur sensiblement constante. Généralement, il est plan. Selon l'invention, la largeur de vitrage découpé peut même être inférieure à 1,5 fois l'épaisseur, et même inférieure à 1,2 fois l'épaisseur, et même inférieure à 1 fois l'épaisseur, et même inférieure ou égal à 0,7 fois l'épaisseur. Généralement, la largeur de vitrage découpé est supérieur à 0,1 fois l'épaisseur. Ainsi l'invention permet notamment la réalisation de bandes de verre à section carrée où rectangulaire ayant la largeur qui vient d'être donnée, et notamment, une largeur de dimension voisine de celle de l'épaisseur ou même inférieure à celle de l'épaisseur.

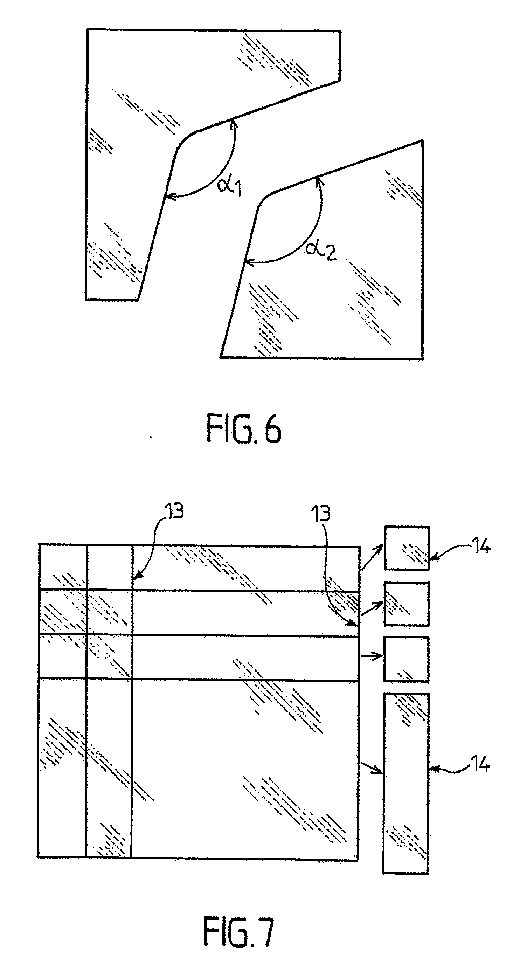

Selon l'invention, il est possible de découper un vitrage selon une ligne de découpe comportant un angle. Cet angle peut par exemple aller de 60° à 120° et en particulier être de 90°. De façon remarquable, la découpe se traduit par l'obtention d'une pièce présentant un angle concave $\alpha_1$ et d'une pièce présentant un angle convexe $\alpha_2$ (voir figure 6). Pour ce faire, il convient que la découpe ne soit pas le résultat de l'intersection de deux lignes de découpe différentes se croisant, ladite intersection formant l'angle souhaité, les deux lignes de découpe se poursuivant au delà de leur intersection. Pour réaliser l'angle selon l'invention, deux possibilités existent :

1) on peut réaliser un trou à l'endroit choisi pour l'angle préalablement à la découpe, puis procéder à la découpe en réalisant deux traçages différents se rejoignant à l'endroit du trou, le trou pouvant avoir un diamètre par exemple de 0,2 à 2 mm ; ou

2) ne pas faire de trou à l'endroit choisi pour l'angle, mais réaliser un traçage respectant en tout endroit la condition déjà énoncée sur le rayon de courbure, lequel doit donc être au minimum de 3 mm. Ainsi, l'angle est en fait une courbe à très petit rayon de courbure. Il est possible de réaliser le traçage en plusieurs fois dès lors que les différents traçages se rejoignent de sorte que leurs tangentes coïncident aux points de rencontre.

Pour le cas où l'on souhaite réaliser le traçage à la main, il peut être préférable de réaliser un trou à l'endroit souhaité pour l'angle. Pour le cas où le traçage est réalisé par une machine, on peut ne pas faire de trou préalablement au traçage dès lors que le traçage respecte le rayon de courbure minimal déjà donné. Avec ce type de machine, le traçage est généralement réalisé en une seule étape, c'est-à-dire que l'objet traçant se pose une fois sur le verre et ne le quitte plus jusqu'à la fin du traçage.

La figure 6 représente deux pièces de vitrage après découpe selon l'invention. On voit que la découpe comporte un angle arrondi à faible rayon de courbure produisant dans les deux parties découpées deux angles s'emboîtant parfaitement l'un dans l'autre. Cet angle a été réalisé sans formation de trou préalablement à la découpe. Selon l'art antérieur, on savait faire des angles à 90°, mais par intersection de lignes de découpe se croisant, c'est-à-dire se poursuivant après leur point de rencontre. La figure 7 illustre cette manière de découper un verre ordinaire selon l'art antérieur, à partir de lignes de découpe (13) traversant toute la surface du vitrage, et menant à des pièces (14) carrés ou rectangulaires. Toutes les pièces ainsi découpées ont leurs angles convexes, aucune des pièces découpées ne présente d'angle concave.

Selon l'invention, il est possible de découper et d'enlever une forme pleine à l'intérieur même d'une plaque de vitrage sans que ladite découpe ne vienne en intersection de la bordure externe d'origine du vitrage. On dégage ainsi une forme pleine dont la bordure externe a la forme de la découpe, du reste du vitrage qui comprend alors une bordure interne ayant la forme de la découpe et une bordure externe qui reste inchangée par rapport à la bordure externe d'origine (avant découpe). Pour ce faire, le traçage est réalisé selon une ligne se rejoignant elle-même sans venir en intersection de la bordure externe du vitrage et aboutissant à la découpe d'une part d'une forme pleine et d'autre part d'une forme trouée, le contour externe de la forme trouée correspondant au contour externe d'origine du vitrage, le contour interne de la forme trouée correspondant au contour externe de la forme pleine. Cette forme pleine peut être un cercle ou avoir un rayon de courbure comme déjà mentionné. La figure 8 illustre cette possibilité. Selon cette figure, une forme pleine (15) a été découpée à l'intérieur d'une plaque qui apparait alors comme une forme trouée (16). Le contour externe de la forme pleine correspond au contour interne (17) de la forme trouée. Le contour externe (18) de la forme trouée est le même que la plaque d'origine avant découpe. La forme pleine peut être un cercle ou peut comprendre un faible rayon de courbure comme déjà mentionné. La forme pleine peut également comprendre un ou plusieurs angles comme déjà mentionné, étant entendu que la réalisation de ces angles doivent être réalisés aux conditions déjà mentionnées, c'est-à-dire avec formation d'un trou préalablement à la découpe où sans formation préalable de trou mais en respectant un rayon de courbure minimal de 3 mm au traçage. Ainsi, on peut découper une forme pleine au contour polygonal. Notamment, la forme polygonal peut comprendre trois, quatre, cinq ou six angles voire plus. Ainsi, on peut découper une forme pleine ayant la forme d'un carré ou rectangle après avoir réalisé une découpe comportant quatre angles à 90° (c'est le cas pour la forme découpée de la figure 8). La forme trouée présente donc une forme de cadre, ladite forme de cadre comprenant une bordure interne de forme carrée ou rectangulaire et une bordure externe de forme carrée ou rectangulaire. Ce cadre a également une section de forme carrée ou rectangulaire. La forme trouée (ou de cadre) ainsi obtenue peut notamment trouver une application comme pièce intercalaire entre deux vitrages comme dans les écrans plats à émission de champ (dits « FED » de l'anglais Field Emission display). La forme trouée peut avoir une largeur de bord ((19) sur la figure 8) très faible, c'est-à-dire correspondant à ce qui a déjà été dit pour les bandes de faible largeur. La forme pleine peut être séparée de la forme trouée, de préférence par extraction du côté du traçage initial. La forme pleine peut généralement être extraite à la main. Pour faciliter l'extraction, notamment pour les épaisseurs de vitrage plus fortes, on peut également procéder à une extraction thermique, laquelle consiste à chauffer (par exemple entre 90 et 220°C) dans un premier temps l'ensemble du vitrage découpé mais pour lequel la forme pleine et la forme trouée n'ont pas encore été séparées, puis dans un deuxième temps on refroidit la partie centrale du vitrage comprenant la forme pleine à extraire. La rétraction provoquée par le refroidissement permet d'extraire plus facilement la forme pleine.

On peut procéder à la découpe selon l'invention à partir d'un traçage en surface d'une feuille de verre traitée conformément à l'invention (traitement chimique, ou couche, ou sous flexion), ladite feuille faisant partie d'un vitrage feuilleté. Dans ce cas, la fissure provoquée par le traçage se propage à travers l'épaisseur de la feuille traitée et s'arrête à l'intercalaire en polymère placé habituellement entre les feuilles d'un vitrage feuilleté. On peut réaliser de la sorte une multitude de fissures linéaires et parallèles à travers la feuille traitée du vitrage feuilleté et traversant ladite feuille jusqu'à l'intercalaire en polymère. Les fissures ainsi créées jouent le rôle de miroir pour la lumière traversant le vitrage. Le vitrage ainsi obtenu, de bon aspect esthétique, peut servir de déflecteur de lumière. La figure 9 illustre cette application. On y voit que les rayons de lumière (20) sont réfléchis aux interfaces (21) des fissures créées conformément à l'invention à travers la feuille (22) traitée du vitrage feuilleté (23) associant deux feuilles de verre séparées par une couche (24) de polymère. Dans cette application, les fissures peuvent par exemple être distantes les unes des autres de 2 mm à 10 mm. Généralement, on cherche à ce que la distance entre deux fissures représente 40 à 80 % de l'épaisseur de la feuille fissurée.

Bien entendu, il est également possible de procéder à une découpe classique, c'est-à-dire traversant toute la surface du vitrage, pour découper des formes carrées ou rectangulaires. Ce type de pièces peut servir de vitrage protecteur pour les cellules à cristaux liquide (dites « LCD » de liquid crystal display en anglais).

La présente invention, particulièrement lorsqu'elle fait intervenir un traitement de trempe chimique est très interressante pour la découpe de vitrages dans le domaine électronique. Cette technique de trempe chimique est particulièrement applicable aux verres capables d'échanger les ions comme c'est le cas des verres pour l'électronique, notamment à haut point de viscosité (« strain point » en anglais), par exemple le verre CS77 commercialisé par Saint-Gobain Glass France. La composition de tels verres est par exemple décrite dans EP 0914299. La technique de découpe est donc applicable sur les lignes de fabrication d'accessoires pour l'électronique (comme les espaceurs ou intercalaires), d'écrans (plasma, LCD, TFT, FED), de cadres pour écrans à effet de champ, de lignes de fabrication de vitrages sous vide. L'utilisation de la trempe chimique procure une bonne résistance mécanique des bords, notamment des bords découpés. Selon les techniques de l'art antérieur de découpe, il est nécessaire de maintenir ou faire venir des pièces en contact avec la surface du verre pour procéder à sa découpe, pour le traçage et/ou le rompage. Ceci est inconvénient si l'on a déjà réalisé une impression sur une surface du verre car tout contact avec cette impression peut l'endommager.

Grâce à la technique selon l'invention, et plus particulièrement lorsqu'elle fait appel à la trempe chimique, on peut donc imprimer le verre (après le traitement générant les contraintes) puis le découper avec un minimum de contact avec des pièces. On peut donc notamment réaliser une vitre mère (motherglass en anglais), imprimer des motifs en surface, puis pratiquer les cycles de fabrication pour ne découper qu'ensuite chaque écran (écran de téléphone, de palm, ou d'ordinateur portable).

Tous les exemples commencent par la trempe chimique d'une plaque de verre, laquelle est réalisée comme suit, les paramètres essentiels de ladite trempe (durée et température) étant rassemblés sur le tableau 1. Les vitrages de départ utilisés étaient les suivants :

- CS77 : verre commercialisé par la société Saint-Gobain Glass France,
- Px : verre de marque Planilux commercialisé par la société Saint-Gobain Glass France,
- C0211 : verre commercialisé par la société Corning.

**trempe chimique pour les exemples**

On prend un verre plat de dimension 300 x 200 x e mm, "e" représentant l'épaisseur que l'on trempe dans un bain de nitrate de potassium à la température T, pendant une durée "t". Les traitements produisent des contraintes à coeur dans la feuille.

**principe de découpe pour les exemples**

Les plaques de verre ont été découpées au diamant ou par une molette selon différentes formes de découpe correspondant à différentes applications. Les découpes avec une molette étaient toutes réalisées sur le principe qui suit. On réalise le traçage avec une molette de marque VITRUM commercialisée par ADLER, ladite molette ayant un angle de 145° et un diamètre de 5 mm sous huile de découpe et sous une charge de façon à ce que la sous-fissure soit plus profonde que la profondeur d'échange $P_e$. Pour les exemples illustrant l'invention, on s'aperçoit que la sous-fissure se propage dans toute l'épaisseur du verre sans qu'il ne soit nécessaire d'appliquer une force de rompage (voir ligne « propagation » dans le tableau 1). Dans certains cas, la propagation a été initiée à l'extrémité du traçage par un ajout d'eau pénétrant par capillarité dans la sous-fissure. Dans d'autres cas, la propagation a été initiée en augmentant la charge à l'extrémité du traçage.

Pour tous les exemples le facteur K dans le verre a été mesuré au biasographe sur des bandes de verre de largeur 10 mm, sauf dans le cas des exemples 5 et 6 pour lesquels les bandes de verre étaient de largeur 3 mm. Dans le tableau 1, on utilise les expressions ou abbréviations suivantes :

- $P_e$ : profondeur d'échange en ions,
- Aug ch : augmentation de charge,
- Propagation et type : on juge si la propagation de la fissure se fait correctement (propagation guidée) ou si elle est incontrôlée, ce qui signifie que le verre ne se rompt pas sur la ligne de traçage, où si elle ne se produit pas, ce qui signifie que le verre n'est finalement pas rompu.

**Exemples 1 et 2: cadres**

Avant la trempe chimique, on a réalisé avec un foret diamanté 4 trous de 1 mm de diamètre dans les coins de la plaque, lesdits trous étant placés à 4 mm des bords de ladite plaque. Après la trempe chimique, la découpe a été réalisée selon des lignes droites parallèles au bords de la plaque et entre les trous, de façon à dessiner un cadre. On peut extraire le rectangle de verre entre les trous de façon à récuperer un cadre (voir figure 8).

**Exemple 3 : réflection de la lumière du jour**

On réalise un vitrage feuilleté avec d'une part la plaque traitée chimiquement, et d'autre part un verre sodocalcique ordinaire (non traité chimiquement) de 2 mm d'épaisseur, en plaçant entre eux de façon classique une couche de polyvinylbutyral (PVB).

Après avoir trempé une extrémité du vitrage (sur environ 5 mm) dans l'eau, on réalise une première série de traçages par la molette, linéaires et parallèles du côté du vitrage trempé chimiquement, lesdits traçages étant distants les uns des autres de 8 mm et se finissant sur le bord trempé dans l'eau. L'eau joue son rôle en initiant la propagation de chaque fissure. On effectue ensuite une seconde série de traçages, entre les traçage de la première série, pour que finalement, la plaque ait des traçages tous les 4 mm environ. On s'aperçoit que toutes les fissures provoquées par les traçages se propagent jusqu'à la couche de PVB, c'est-à-dire traversent toute l'épaisseur de la vitre trempée chimiquement. Le vitrage peut alors jouer le rôle de réflecteur de la lumière qui le traverse gràce à l'effet miroir de chacune des fissures (voir figure 9).

### Exemple 4 : découpe d'un cercle

On découpe dans le verre trempé chimiquement un cercle de diamètre 60 mm à l'aide d'une molette de marque VITRUM commercialisée par ADLER, ladite molette ayant un angle de 145° et un diamètre de 5 mm, ladite molette étant montée sur une tournette à manivelle de référencée Bohle 530.0 section 1.19. On peut extraire le disque de verre par extraction thermique sans provoquer de cassure, ni au disque, ni au reste de la plaque.

### Exemple 5 : découpe d'un verre pelliculaire

On découpe au diamant la feuille de verre de 300 $\mu$m d'épaisseur après sa trempe chimique, sans initiation, ni par l'eau ni par augmentation de charge. La découpe est réalisée facilement le long du traçage sans cassure incontrôlée. Le facteur K dans le verre a été mesurée au biasographe sur des bandes de 3 mm de large.

### Exemple 6 (comparatif)

On procède comme pour l'exemple 5 sauf que la trempe chimique est réalisée de façon à ce que le facteur K atteigne la valeur mentionnée dans le tableau 1.

### Exemple 7 à 9 (comparatifs)

On procède comme dans l'exemple 2 sauf que la trempe chimique est réalisée de façon à ce que le facteur K atteigne la valeur mentionnée dans le tableau 1.

Tableau 1

| Exemple n° | 1 et 4 | 2 | 3 | 5 | 6 (comp) | 7 (comp) | 8 (comp) | 9 (comp) |
|---|---|---|---|---|---|---|---|---|
| Nature verre avant traitement | CS77 | Px | Px | C0211 | C0211 | Px | Px | Px |
| Paramètres trempe (T et t) | 15 h 490°C | 8 h 490°C | 13 h 490°C | 2 h 460°C | 3 h 460°C | - | 72 h 490°C | 9 jours 460°C |
| Epaisseur verre (mm) | 1,1 | 1,6 | 2,85 | 0,3 | 0,3 | 1,6 | 1,6 | 3,85 |
| K (MPa.m$^{1/2}$) | 0,19 | 0,26 | 0,24 | 0,38 | 0,42 | 0,01 | 0,52 | 0,52 |
| $P_e$ ($\mu$m) | 27 | 41 | 51 | 17 | 20 | 0 | 122 | 123 |
| Charge molette (Kg) | 3 | 3,7 | 4,0 | Non contrôlée | Non contrôlée | 4 | 5,5 - 6 | 3 à 6 |
| Profondeur sous-fissure ($\mu$m) | 170 | 395 | 360 | >30 | >30 | < 550 | 400 | 430 |
| Initiation ? | Eau | Aug ch de 0,5 kg | Eau | Non | Non | Eau | Non | aug ch de 0,7 kg |
| Propagation et type ? | Propagation guidée | Propagation guidée | Propagation guidée | Propagation guidée | Propagation Incontrôlée | Pas de propagation | Pas de propagation | Pas de propagation |

**Revendications**

1. Procédé de découpe d'un vitrage comprenant une feuille de verre comprenant deux faces principales, ledit procédé ne faisant pas intervenir de force de rompage, ledit procédé comprenant les étapes suivantes :

   - application d'un traitement à la feuille de verre générant des contraintes et au moins une zone en compression et au moins une zone en extension, la distribution des contraintes étant biaxiale, sensiblement isotrope et auto-équilibrée dans son épaisseur, lesdites contraintes étant telles que le facteur K est compris entre 0,05 et 0,4 MPa.m$^{1/2}$, ledit facteur K étant défini par

$$K = \left[ \int_z \sigma_z^2 . H(\sigma_z).dz \right]^{1/2}$$

   dans laquelle z est une position dans l'épaisseur, $\sigma_z$ est l'intensité à la position z de la contrainte biaxiale sensiblement isotrope, $H(\sigma_z)$ est égal à 1 si $\sigma_z$ est supérieur à 0 et est égal à 0 si $\sigma_z$ est inférieur ou égal 0, avec la convention qu'une extension est notée positivement et une compression négativement, puis
   - traçage d'une sous-fissure plus profonde que 10 $\mu$m selon une ligne souhaitée de découpe du verre traité, ladite sous-fissure atteignant la zone du vitrage en extension.

2. Procédé selon la revendication précédente **caractérisé en ce qu'** avant traitement le verre contient un oxyde d'alcalin et **en ce que** le traitement est une trempe chimique.

3. Procédé selon la revendication précédente **caractérisé en ce que** la trempe chimique mène à un gradient en ions K$^+$ ou Na$^+$ perpendiculairement à au moins l'une des faces principales et décroissant à partir de ladite face principale.

4. Procédé selon l'une des deux revendications précédentes **caractérisé en ce que** la trempe chimique a produit un échange d'ions sur une profondeur d'au plus 50 $\mu$m.

5. Procédé selon la revendication 1 **caractérisé en ce que** le traitement est l'application par dépôt d'une couche en compression.

6. Procédé selon la revendication précédente **caractérisé en ce que** la couche a une épaisseur allant de 1 à 20 $\mu$m.

7. Procédé selon la revendication précédente **caractérisé en ce que** la couche contient une contrainte allant de 200 MPa à 5 GPa.

8. Procédé selon la revendication 1 **caractérisé en ce que** le traitement est l'application de forces de flexion biaxiales sensiblement isotropes.

9. Procédé selon la revendication précédente **caractérisé en ce que** les forces de flexion sont générées par la combinaison d'une part de l'application de températures différentes sur les faces principales, et d'autre part de forces résistant à la déformation que la différence de température induit.

10. Procédé selon l'une des deux revendications précédentes **caractérisé en ce que** les forces de flexion sont comprises entre 3 et 20 MPa.

11. Procédé selon l'une des revendications précédentes **caractérisé en ce que** le vitrage présente une épaisseur allant de 0,7 à 5,2 mm.

12. Procédé selon la revendication précédente **caractérisé en ce que** le vitrage présenté une épaisseur allant de 2,6 à 5,2 mm.

13. Procédé selon l'une des revendications précédentes **caractérisé en ce que** le traçage est réalisé sur une face principale en compression et produit une sous-fissure traversant la zone en compression pour atteindre la zone en extension.

**14.** Procédé selon l'une des revendications 1 à 12 **caractérisé en ce que** le traçage est réalisé sur une face principale en extension.

**15.** Procédé selon l'une des revendications précédentes **caractérisé en ce que** le traçage est réalisé selon une ligne se rejoignant elle-même sans venir en intersection de la bordure externe du vitrage et aboutissant à la découpe d'une part d'une forme pleine et d'autre part d'une forme trouée, le contour externe de la forme trouée correspondant au contour externe d'origine du vitrage, le contour interne de la forme trouée correspondant au contour externe de la forme pleine.

**16.** Procédé selon l'une des revendications précédentes **caractérisé en ce que** le traçage est réalisé selon une ligne présentant en au moins un endroit un rayon de courbure inférieur à 5 mm.

**17.** Vitrage comprenant une feuille de verre comprenant deux faces principales et au moins une tranche, ledit vitrage présentant une distribution de contraintes dans son épaisseur, lesdites contraintes étant biaxiales, sensiblement isotropes et autoéquilibrées, et dont le facteur K est compris entre 0,05 et 0,4 MPa.m$^{1/2}$, ledit facteur K étant défini par

$$K = \left[ \int_z \sigma_z^2.H(\sigma_z).dz \right]^{\frac{1}{2}}$$

dans laquelle z est une position dans l'épaisseur, $\sigma_z$ est la contrainte à la position z, $H(\sigma_z)$ est égal à 1 si $\sigma_z$ est supérieur à 0 et est égal à 0 si $\sigma_z$ est inférieur ou égal 0, avec la convention qu'une extension est notée positivement et une compression négativement.

**18.** Vitrage selon la revendication précédente **caractérisé en ce qu'**il comprend un gradient en ions alcalins perpendiculairement à au moins l'une des faces principales et décroissant à partir de ladite face principale.

**19.** Vitrage selon la revendication précédente **caractérisé en ce que** le gradient perpendiculaire à au moins l'une des faces principales existe à la surface d'au moins une tranche.

**20.** Vitrage selon la revendication précédente **caractérisé en ce que** la tranche présente la trace d'une sous-fissure de découpe.

**21.** Vitrage selon l'une des revendications de vitrage précédentes **caractérisé en ce que** au moins une tranche ne comprend pas de gradient en ions alcalins dans la direction perpendicalaire à ladite tranche.

**22.** Vitrage selon l'une des revendications de vitrage précédentes **caractérisé en ce qu'**il présente une épaisseur allant de 0,7 à 5,2 mm.

**23.** Vitrage selon la revendication de vitrage précédente **caractérisé en ce qu'**il présente une épaisseur allant de 2,6 à 5,2 mm.

**24.** Vitrage selon l'une des revendications de vitrage précédentes **caractérisé en ce que** l'une de ses bordures présente en au moins un endroit un rayon de courbure inférieur à 5 mm.

**25.** Vitrage selon l'une des revendications de vitrage précédentes, au moins partiellement sous la forme d'une bande à section carrée où rectangulaire présentant une largeur inférieure à 1,5 fois son épaisseur.

**26.** Vitrage selon la revendication précédente présentant au moins partiellement une largeur inférieure à 1 fois son épaisseur.

**27.** Vitrage selon l'une des revendications de vitrage précédentes présentant une forme de cadre à section carrée ou rectangulaire, ladite forme de cadre comprenant une bordure interne de forme carrée ou rectangulaire et une bordure externe de forme carrée ou rectangulaire.

**28.** Ecran plat à émission de champ comprenant un intercalaire comprenant un vitrage de la revendication précédente.

**29.** Vitrage feuilleté dont l'une des feuille de verre est un vitrage de l'une des revendications 17 à 19 et comprend une multitude de fissures linéaires parallèles la traversant jusqu'à l'intercalaire en polymère.

**30.** Vitrage selon la revendication précédente, **caractérisé en ce que** les fissures sont distantes les unes des autres de 2 mm à 10 mm.

**31.** Vitrage selon l'une des deux revendications précédentes, **caractérisé en ce que** la distance entre deux fissures représente 40 à 80 % de l'épaisseur de la feuille fissurée.

**Claims**

**1.** A method of cutting a glazing unit that includes a glass sheet having two main faces, said method not involving the application of a breaking force, said method comprising the following steps:

- application of a treatment to the glass sheet that generates stresses and at least one region in compression and at least one region in extension, the distribution of the stresses being biaxial, approximately isotropic and self-balanced in its thickness, said stresses being such that the K factor is between 0.05 and 0.4 MPa.m$^{1/2}$, said K factor being defined by

$$K = \left[ \int_z \sigma_z^2 . H(\sigma_z).dz \right]^{\frac{1}{2}}$$

in which z is a position in the thickness, $\sigma_z$ is the intensity of the approximately isotropic biaxial stress at the position z, $H(\sigma_z)$ is equal to 1 if $\sigma_z$ is greater than 0 and is equal to 0 if $\sigma_z$ is less than or equal to 0, with the convention that extension is denoted by positive values and compression by negative values; and then
- scoring a subcrack deeper than 10 $\mu$m along the desired line of cutting of treated glass, said subcrack reaching that region of the glazing in extension.

**2.** The method as claimed in the preceding claim, **characterized in that**, before treatment, the glass contains an alkali metal oxide and **in that** the treatment is a chemical toughening treatment.

**3.** The method as claimed in the preceding claim, **characterized in that** the chemical toughening results in a K$^+$ or Na$^+$ ion gradient perpendicular to at least one of the main faces and decreasing from said main face.

**4.** The method as claimed in either of the two preceding claims, **characterized in that** the chemical toughening has resulted in ionic exchange over a depth of at most 50 $\mu$m.

**5.** The method as claimed in claim 1, **characterized in that** the treatment is the application by deposition of a film in compression.

**6.** The method as claimed in the preceding claim, **characterized in that** the film has a thickness ranging from 1 to 20 $\mu$m.

**7.** The method as claimed in the preceding claim, **characterized in that** the film contains a stress ranging from 200 MPa to 5 GPa.

**8.** The method as claimed in claim 1, **characterized in that** the treatment is the application of approximately isotropic biaxial bending forces.

**9.** The method as claimed in the preceding claim, **characterized in that** the bending forces are generated by the combination, on the one hand, of the application of different temperatures to the main faces, and on the other hand, of forces that oppose the deformation that the temperature difference induces.

**10.** The method as claimed in either of the two preceding claims, **characterized in that** the bending forces are between 3 and 20 MPa.

**11.** The method as claimed in one of the preceding claims, **characterized in that** the glazing has a thickness ranging from 0.7 to 5.2 mm.

**12.** The method as claimed in the preceding claim, **characterized in that** the glazing has a thickness ranging from 2.6 to 5.2 mm.

**13.** The method as claimed in one of the preceding claims, **characterized in that** the scoring is carried out on a main face in compression and produces a subcrack that passes through the region in compression in order to reach the region in extension.

**14.** The method as claimed in one of claims 1 to 12, **characterized in that** the scoring is carried out on a main face in extension.

**15.** The method as claimed in one of the preceding claims, **characterized in that** the scoring is carried out along a line that joins up with itself without intersecting the external border of the glazing and resulting in the cutting, on the one hand, of a full shape and, on the other hand, of a holed shape, the external outline of the holed shape corresponding to the original external outline of the glazing, the internal outline of the holed shape corresponding to the external outline of the full shape.

**16.** The method as claimed in one of the preceding claims, **characterized in that** the scoring is carried out along a line having, at at least one point, a radius of curvature of less than 5 mm.

**17.** A glazing unit comprising a glass sheet having two main faces and at least one edge, said glazing unit having a distribution of stresses in its thickness, said stresses being biaxial, approximately isotropic and self-balanced, and the K factor of which is between 0.05 and 0.4 MPa.m$^{1/2}$, said K factor being defined by

$$K = \left[ \int_z \sigma_z^2 . H(\sigma_z).dz \right]^{1/2}$$

in which z is a position in the thickness, $\sigma_z$, is the stress at the position z, H ($\sigma_z$) is equal to 1 if $\sigma_z$ is greater than 0 and is equal to 0 if $\sigma_z$ is less than or equal to 0, with the convention that extension is denoted by positive values and compression by negative values.

**18.** The glazing unit as claimed in the preceding claim, **characterized in that** it has an alkali metal ion gradient perpendicular to at least one of the main faces and decreasing from said main face.

**19.** The glazing unit as claimed in the preceding claim, **characterized in that** the gradient perpendicular to at least one of the main faces exists at the surface of at least one edge.

**20.** The glazing unit as claimed in the preceding claim, **characterized in that** the edge has the scored line of a cutting subcrack.

**21.** The glazing unit as claimed in one of the preceding glazing unit claims, **characterized in that** at least one edge has no alkali metal ion gradient in the direction perpendicular to said edge.

**22.** The glazing unit as claimed in one of the preceding glazing unit claims, **characterized in that** it has a thickness ranging from 0.7 to 5.2 mm.

**23.** The glazing unit as claimed in the previous glazing unit claim, **characterized in that** it has a thickness ranging from 2.6 to 5.2 mm.

**24.** The glazing unit as claimed in one of the preceding glazing unit claims, **characterized in that** one of its borders has, at at least one point, a radius of curvature of less than 5 mm.

**25.** The glazing unit as claimed in one of the preceding glazing unit claims, at least partly in the form of a strip with a square or rectangular cross section having a width of less than 1.5 times its thickness.

26. The glazing unit as claimed in the preceding claim, having at least partly a width of less than 1 times its thickness.

27. The glazing unit as claimed in one of the preceding glazing unit claims, having a frame shape with a square or rectangular cross section, said frame shape having an internal border of square or rectangular shape and an external border of square or rectangular shape.

28. A flat field emission display, that includes an insert comprising a glazing unit of the preceding claim.

29. A laminated glazing unit, one of the glass sheets of which, which is a glazing unit as claimed in one of the claims 17 to 19 and includes a multitude of parallel linear cracks passing through it as far as the polymer interlayer.

30. The glazing unit as claimed in the preceding claim, **characterized in that** the cracks are separated from one another by a distance of 2 mm to 10 mm.

31. The glazing unit as claimed in either of the two preceding claims, **characterized in that** the distance between two cracks represents 40 to 80% of the thickness of the cracked sheet.

**Patentansprüche**

1. Verfahren zum Zuschneiden eines Glases, das eine zwei Hauptseiten umfassende Glasscheibe umfasst, in welchem keine Bruchkraft auftritt und welches die Stufen:

   - Behandeln der Glasscheibe, wodurch Spannungen, mindestens ein Druckbereich und mindestens ein Dehnungsbereich erzeugt werden, wobei die Spannungsverteilung in der Dicke biaxial ist, im Wesentlichen isotrop ist und automatisch ihr Gleichgewicht einstellt und diese Spannungen derart sind, dass der Faktor K 0,05 bis 0,4 MPa·m$^{1/2}$ beträgt und durch

$$K = \left[ \int_z \sigma_z^2 . H(\sigma_z) . dz \right]^{\frac{1}{2}}$$

   definiert ist, worin z eine Stelle in der Dicke, $\sigma_z$ die Stärke der im Wesentlichen isotropen biaxialen Spannung an der Stelle z und $H(\sigma_z)$ gleich 1, wenn $\sigma_z$ größer als 0, und gleich 0, wenn $\sigma_z$ kleiner als oder gleich 0, mit der Vereinbarung, dass eine Ausdehnung als positiv und ein Zusammendrücken als negativ **gekennzeichnet** wird, bedeutet, und anschließend
   - Anreißen einer Linie, die tiefer als 10 $\mu$m ist, entlang der gewünschten Zuschneidstrecke des behandelten Glases, wobei die Linie den Ausdehnungsbereich des Glases erreicht,

   umfasst.

2. Verfahren nach dem vorhergehenden Anspruch, **dadurch gekennzeichnet, dass** das Glas vor der Behandlung ein Alkalimetalloxid enthält und dass die Behandlung ein chemisches Vorspannen ist.

3. Verfahren nach dem vorhergehenden Anspruch, **dadurch gekennzeichnet, dass** durch das chemische Vorspannen ein K$^+$- oder Na$^+$-Gradient erzeugt wird, der senkrecht zu mindestens einer der Hauptseiten verläuft und ab dieser Hauptseite abnimmt.

4. Verfahren nach einem der zwei vorhergehenden Ansprüche, **dadurch gekennzeichnet, dass** durch das chemische Vorspannen über eine Tiefe von höchstens 50 $\mu$m ein Ionenaustausch bewirkt wird.

5. Verfahren nach Anspruch 1, **dadurch gekennzeichnet, dass** die Behandlung das Aufbringen einer unter Druckspannungen stehenden Schicht ist.

**6.** Verfahren nach dem vorhergehenden Anspruch, **dadurch gekennzeichnet, dass** die Dicke der Schicht 1 bis 20 μm beträgt.

**7.** Verfahren nach dem vorhergehenden Anspruch, **dadurch gekennzeichnet, dass** die Schicht ein Spannung von 200 MPa bis 5 GPa enthält.

**8.** Verfahren nach Anspruch 1, **dadurch gekennzeichnet, dass** die Behandlung im Einwirken von im Wesentlichen isotropen biaxialen Biegekräften besteht.

**9.** Verfahren nach dem vorhergehenden Anspruch, **dadurch gekennzeichnet, dass** die Biegekräfte erzeugt werden durch die Kombination von einerseits der Anwendung unterschiedlicher Temperaturen auf die Hauptseiten und andererseits von Kräften, die der Verformung widerstehen, die von der Temperaturdifferenz verursacht wird.

**10.** Verfahren nach einem der zwei vorhergehenden Ansprüche, **dadurch gekennzeichnet, dass** die Biegekräfte 3 bis 20 MPa betragen.

**11.** Verfahren nach einem der vorhergehenden Ansprüche, **dadurch gekennzeichnet, dass** die Dicke des Glases 0,7 bis 5,2 mm beträgt.

**12.** Verfahren nach dem vorhergehenden Anspruch, **dadurch gekennzeichnet, dass** die Dicke des Glases 2,6 bis 5,2 mm beträgt.

**13.** Verfahren nach einem der vorhergehenden Ansprüche, **dadurch gekennzeichnet, dass** das Anreißen auf einer unter Druckspannungen stehenden Hauptseite durchgeführt wird und eine Anreißlinie erzeugt, die durch den Druckbereich führt, um den Ausdehnungsbereich zu erreichen.

**14.** Verfahren nach einem der Ansprüche 1 bis 12, **dadurch gekennzeichnet, dass** das Anreißen auf einer unter Dehnungsspannungen stehenden Hauptseite durchgeführt wird.

**15.** Verfahren nach einem der vorhergehenden Ansprüche, **dadurch gekennzeichnet, dass** das Anreißen entlang einer Linie durchgeführt wird, die sich mit sich selbst wieder vereinigt, ohne den Außenrand des Glases zu schneiden, und einerseits an den Ausschnitt einer vollen Form und andererseits einer Lochform anstößt, wobei der Außenumfang der Lochform dem ursprünglichen Außenumfang des Glases und der Innenumfang der Lochform dem Außenumfang der vollen Form entspricht.

**16.** Verfahren nach einem der vorhergehenden Ansprüche, **dadurch gekennzeichnet, dass** das Anreißen entlang einer Linie durchgeführt wird, die an mindestens einer Stelle einen Krümmungsradius von kleiner als 5 mm aufweist.

**17.** Glas, das eine zwei Hauptseiten und mindestens eine Schmalseite umfassende Glasscheibe umfasst und in der Dicke eine Verteilung der Spannungen aufweist, die biaxial sind, im Wesentlichen isotrop sind, automatisch ihr Gleichgewicht einstellen und deren Faktor K 0,05 bis 0,4 MPa·m$^{1/2}$ beträgt und durch

$$K = \left[ \int_z \sigma_z^2 . H(\sigma_z) . dz \right]^{1/2}$$

definiert ist, worin z eine Stelle in der Dicke, $\sigma_z$ die Spannung an der Stelle z und $H(\sigma_z)$ gleich 1, wenn $\sigma_z$ größer als 0, und gleich 0, wenn $\sigma_z$ kleiner als oder gleich 0, mit der Vereinbarung, dass eine Ausdehnung als positiv und ein Zusammendrücken als negativ **gekennzeichnet** wird, bedeutet.

**18.** Glas nach dem vorhergehenden Anspruch, **dadurch gekennzeichnet, dass** es einen Alkalimetallionengradienten enthält, der senkrecht zu mindestens einer der Hauptseiten verläuft und ab dieser Hauptseite abnimmt.

**19.** Glas nach dem vorhergehenden Anspruch, **dadurch gekennzeichnet, dass** der senkrecht zu mindestens einer der Hauptseiten verlaufende Gradient in der Fläche mindestens einer Schmalseite vorhanden ist.

20. Glas nach dem vorhergehenden Anspruch, **dadurch gekennzeichnet, dass** die Schmalseite eine Anreißlinie für den Ausschnitt aufweist.

21. Glas nach einem der es betreffenden vorhergehenden Ansprüche, **dadurch gekennzeichnet, dass** mindestens eine Schmalseite in der zu ihr senkrechten Richtung keinen Alkalimetallionengradienten enthält.

22. Glas nach einem der es betreffenden vorhergehenden Ansprüche, **dadurch gekennzeichnet, dass** seine Dicke 0,7 bis 5,2 mm beträgt.

23. Glas nach dem es betreffenden vorhergehenden Anspruch, **dadurch gekennzeichnet, dass** seine Dicke 2,6 bis 5,2 mm beträgt.

24. Glas nach einem der es betreffenden vorhergehenden Ansprüche, **dadurch gekennzeichnet, dass** einer seiner Ränder an mindestens einer Stelle einen Krümmungsradius von kleiner als 5 mm aufweist.

25. Glas nach einem der es betreffenden vorhergehenden Ansprüche, **dadurch gekennzeichnet, dass** es wenigstens teilweise in Form eines Bandes mit quadratischem oder rechteckigem Querschnitt vorliegt, das eine Breite aufweist, die kleiner als das 1,5 fache seiner Dicke ist.

26. Glas nach dem vorhergehenden Anspruch, **dadurch gekennzeichnet, dass** es wenigstens teilweise eine Breite aufweist, die kleiner als das 1 fache seiner Dicke ist.

27. Glas nach einem der es betreffenden vorhergehenden Ansprüche, **dadurch gekennzeichnet, dass** es die Form eines Rahmens mit quadratischem oder rechteckigem Querschnitt aufweist, wobei diese Rahmenform einen Innenrand mit quadratischer oder rechteckiger Form und einen Außenrand mit quadratischer oder rechteckiger Form umfasst.

28. Feldemissionsdisplay, das ein Zwischenteil umfasst, das ein Glas nach dem vorhergehenden Anspruch umfasst.

29. Verbundglas, wovon eine der Glasscheiben ein Glas nach einem der Ansprüche 17 bis 19 ist und eine Vielzahl von parallelen geraden Rissen umfasst, die durch sie bis zur Kunststoffzwischenschicht hindurchgehen.

30. Glas nach dem vorhergehenden Anspruch, **dadurch gekennzeichnet, dass** die Abstände zwischen den Rissen 2 bis 10 mm betragen.

31. Glas nach einem der zwei vorhergehenden Ansprüche, **dadurch gekennzeichnet, dass** der Abstand zwischen zwei Rissen 40 bis 80 % der Dicke der mit Rissen versehenen Glasscheibe ausmacht.

FIG.1

FIG.2a

FIG.2b

FIG.3

FIG.4

FIG.5

FIG. 6

FIG. 7

FIG.8

FIG.9

**EP 1 501 766 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9846537 A
- EP 793132 A
- EP 875490 A
- EP 982121 A
- EP 964112 A
- FR 1598242
- FR 2053664
- FR 2063482
- FR 9704508
- WO 9611887 A
- EP 0914299 A

**Littérature non-brevet citée dans la description**

- **H. ABEN ; C. GUILLEMET.** Photoelasticity of glass. Springer-Verlag, 1993, 150